# EUROPEAN PATENT SPECIFICATION

(11) **EP 3 401 093 B1**
(45) Date of publication and mention of the grant of the patent: **26.08.2020**
(21) Application number: 16883681.5
(22) Date of filing: 02.11.2016
(51) Int. Cl.: C08J 7/04

(54) **LAMINATE AND METHOD FOR PRODUCING SAME**
LAMINAT UND VERFAHREN ZUR HERSTELLUNG DAVON
STRATIFIÉ ET SON PROCÉDÉ DE PRODUCTION

(30) Priority: 08.01.2016 JP 2016002554
(43) Date of publication of application: 14.11.2018
(73) Proprietor: Shin-Etsu Chemical Co., Ltd., Tokyo 100-0004 (JP)
(72) Inventor: HIROKAMI, Munenao, Annaka-shi Gunma 379-0224 (JP)
(74) Representative: Mewburn Ellis LLP
(86) International application number: PCT/JP2016/082606
(87) International publication number: WO 2017/119181

(56) References cited:
- EP-A1- 2 517 878
- EP-A1- 2 666 629
- JP-A- 2001 239 619
- JP-A- 2008 513 231
- JP-A- 2010 121 022
- US-A- 4 233 428
- US-A1- 2004 138 356

## Description

### TECHNICAL FIELD

The present invention relates to a laminate and a method for producing the same. More particularly, the invention relates to a laminate having a substrate and, laminated on the surface thereof, a primer coat layer and a topcoat layer, and relates also to a method for producing such a laminate.

### BACKGROUND ART

In recent years, there has been an increased need to coat or paint poorly bondable materials such as polypropylene (PP) and polyethylene (PE) using coating agents or paints.

Techniques for improving the adhesiveness of such poorly bonding materials by plasma irradiating or otherwise surface treating the material are known (see, for example, Patent Document 1). However, this approach has numerous drawbacks, such as increased cost due to the introduction of plasma irradiation equipment, decreased productivity, and poor applicability to most substrates.

In general, polyolefins modified with maleic acid and other compounds are widely used as primers for increasing paint adhesion, but a practical level of adhesion has not yet been achieved in cases where poorly bondable materials such as those mentioned above are used.

In light of this, there is a strong desire for poorly bonding materials of improved adhesiveness. In particular, there exists a desire for the development of a technique that is capable of improving the adhesiveness of a poorly bondable material by a simple coating operation.

### PRIOR ART DOCUMENTS

### PATENT DOCUMENTS

Patent Document 1: JP-A 2005-138345

### SUMMARY OF INVENTION

### TECHNICAL PROBLEM

It is therefore an object of this invention to provide a laminate in which each layer exhibits a good adhesion, even in cases where a substrate made of a poorly bondable material is used, and to provide a simple and convenient method for producing such a laminate.

### SOLUTION TO PROBLEM

The inventors have conducted extensive investigations in order to achieve these objects. As a result, they have discovered that, in a laminate having a substrate and, laminated thereon, a specific primer coat layer and a specific topcoat layer, by adding an amino group-containing silane coupling agent to one or both of the primer composition and the topcoat composition and forming the respective layers, even in cases where a substrate made of a poorly bondable material is used, a laminate can be obtained in which adhesion between the substrate and the topcoat layer is greatly improved.

Accordingly, the invention provides a laminate and a method for producing a laminate according to the claims.

### ADVANTAGEOUS EFFECTS OF INVENTION

The present invention makes it possible to provide a laminate which, even when using a substrate made of a poorly bondable material such as polypropylene or polyethylene, has an excellent bond strength between the substrate and the primer layer.

With the inventive method for producing a laminate using a coating method, a laminate having high adhesive properties and excellent durability can be easily obtained without carrying out surface treatment such as plasma irradiation.

### DESCRIPTION OF EMBODIMENTS

The invention is described in detail below.

The laminate according to this invention has a substrate, a primer coat layer formed on at least one surface of the substrate, and a topcoat layer formed on the primer coat layer. The primer coat layer is formed of a primer composition which contains an acid-modified polyolefin, the topcoat layer is formed of the cured product of a topcoat composition which contains a condensation-curable silicone composition. One or both of the primer composition and the topcoat composition includes an amino group-containing silane coupling agent.

Examples of the substrate used in the inventive laminate include, without particular limitation, substrates made of various metals, such as iron, stainless steel, aluminum, nickel, zinc and copper; substrates made of synthetic resins, such as polyphenylene sulfide resins, polyolefin resins (e.g., polypropylene resins, polyethylene resins), acrylic resins, phenolic resins, epoxy resins, polycarbonate resins, polybutylene terephthalate resins and alkali-treated fluoropolymers; substrates made of inorganic materials, such as glass, ceramic, cement and mortar; and sealing materials of various types, such as modified silicone, silicone, polyurethane, acrylic urethane, polysulfide, modified polysulfide, butyl rubber, acrylic, SBR, fluorine-containing and isobutylene-type sealing materials. As mentioned above, this invention is particularly effective in cases where a poorly bondable material such as polypropylene resin or polyethylene resin is used as the substrate.

An acid-modified polyolefin-containing composition is used as the primer composition in this invention.

The acid-modified polyolefin used may be one that is suitably selected from among known acid-modified polyolefins. A maleic anhydride-modified polyolefin is preferred in this invention.

Specific examples of maleic anhydride-modified polyolefins include maleic anhydride-modified polyethylene, maleic anhydride-modified polypropylene, maleic anhydride-modified polybutadiene, maleic anhydride-modified polystyrene, maleic anhydride-modified polymethacrylate; and maleic anhydride-modified copolymers of two or more monomers selected from among linear olefins such as ethylene, propylene, 1-butene, 1-pentene and 1-hexene, branched olefins such as 3-methyl-1-butene, 3-methyl-1-pentene and 4-methyl-1-pentene, butadiene, styrene and the like. Maleic anhydride-modified polypropylene is preferred.

These maleic anhydride-modified polyolefins may be synthesized by a hitherto known method, or a commercial product may be used.

The topcoat composition used may be one containing a condensation-curable silicone composition.

"Condensation-curable silicone composition" refers herein to a composition that has hydrolyzable silyl groups or silanol groups, which groups undergo hydrolytic condensation under the influence of moisture and a catalyst or in a heating environment to form a silicone skeleton.

Specific examples include silicone oligomers which, in the presence of a catalyst, react with moisture in the air and are able to form a cured film, and silicone resins which have silanol groups and are curable by heat curing. Silicone oligomers that are curable at room temperature are especially preferred.

Such silicone oligomers are available as commercial products, specific examples of which include the methyl group-containing silicone oligomers KC-89S, KR-515, KR-500, X-40-9225, X-40-9246 and X-40-9250 (all from Shin-Etsu Chemical Co., Ltd.); the methyl group and phenyl group-containing silicone oligomers KR-401N, X-40-9227, KR-510, KR-9218 and KR-213 (all from Shin-Etsu Chemical Co., Ltd.); the epoxy group-containing silicone oligomers KR-517, X-41-1059A, X-24-9590 and KR-516 (all from Shin-Etsu Chemical Co., Ltd.); the mercapto group-containing silicone oligomers X-41-1805, X-41-1810 and X-41-1818 (all from Shin-Etsu Chemical Co., Ltd.); the acrylic group-containing silicone oligomer KR-513 (Shin-Etsu Chemical Co., Ltd.), the methacrylic group-containing silicone oligomer X-40-9296 (Shin-Etsu Chemical Co., Ltd.), and the vinyl group-containing silicone oligomer KR-511 (Shin-Etsu Chemical Co., Ltd.).

The curing catalyst for curing the silicone oligomer is exemplified by compounds of aluminum, titanium, zirconium, tin and the like. Specific examples include diisopropoxy(ethyl acetoacetate) aluminum, isopropoxybis(ethyl acetoacetate) aluminum, tris(ethyl acetoacetate) aluminum, diisopropoxybis(acetyl acetonate) titanium, diisopropoxybis(ethyl acetoacetate) titanium, tetrakis(2-butoxyethyl alcoholate) titanium, dibutoxybis(ethyl acetoacetate) zirconium, tetrakis(2-butoxyethyl alcoholate) zirconium, dibutyltin dilaurate and dibutyltin bis(octyloxycarbonyl methylthiolate). Commercial products of these include, for example, D-20, D-25 and CX-9740 (all from Shin-Etsu Chemical Co., Ltd.).

As noted above, in this invention, by adding an amino group-containing silane coupling agent to one or both of the primer composition and the topcoat composition, adhesion between the substrate and the topcoat layer is greatly improved.

When the amino group-containing silane coupling agent is added to the primer composition, the acid-modified sites on the acid-modified polyolefin react with amino groups on the amino group-containing silane coupling agent, forming an alkoxysilyl group-containing polyolefin. It is thought that the polyolefin thus formed adheres closely to the substrate and, along with this, the condensation-curable silicone composition within the topcoat composition and alkoxysilyl groups from the amino group-containing silane coupling agent condensation cure, resulting in the appearance of high adhesive properties.

On the other hand, in cases where the amino group-containing silane coupling agent is added to the topcoat composition, it is thought that, when the topcoat composition is applied onto the primer layer, the acid-modified sites on the acid-modified polyolefin within the primer layer react with amino groups on the amino group-containing silane coupling agent within the topcoat composition and, moreover, alkoxysilyl groups on the amino group-containing silane coupling agent undergo condensation curing with the condensation-curable silicone composition in the topcoat composition, resulting in the appearance of high adhesive properties.

To prevent a loss of adhesion over time due to transesterification between a carboxylic acid formed by the reaction of acid-modified sites on the acid-modified polyolefin in the primer composition with amino groups on the amino group-containing silane coupling agent, and alkoxysilyl groups on the silane coupling agent, it is preferable for the amino group-containing silane coupling agent to be added only to the topcoat composition.

The amino group-containing silane coupling agent is added in an amount which can be suitably set while considering the balance among, for example, the adhesion-increasing effect, the shelf stability of the composition, and the properties of the resulting film. When added to the primer composition, the amount is preferably from 0.1 to 10 moles, and more preferably from 0.2 to 5 moles, per mole of acid-modified sites on the acid-modified polyolefin included in the primer composition. When added to the topcoat composition, the amount is preferably from 0.1 to 10 parts by weight, and more preferably from 0.2 to 5 parts by weight, per 100 parts by weight of the condensation-curable silicone composition.

The amino group-containing silane coupling agent may be suitably selected and used from among known compounds. Illustrative examples include N-2-(aminoethyl)-3-aminopropylmethyldimethoxysilane, N-2-(aminoethyl)-3-aminopropyltrimethoxysilane, N-2-(aminoethyl)-3-aminopropyltriethoxysilane, 3-aminopropyltrimethoxysilane, 3-aminopropyltriethoxysilane, 3-triethoxysilyl-N-(1,3-dimethylbutylidene)propylamine, N-phenyl-3-aminopropyltrimethoxysilane and N,N-bis[3-(trimethoxysilyl)propyl]ethylenediamine. Of these, 3-aminopropyltrimethoxysilane and 3-aminopropyltriethoxysilane are preferred.

Depending on the intended purpose, the primer composition and topcoat composition used in the laminate of the invention may also include diluting solvents and other additives.

Exemplary additives include curing catalysts, property modifiers that modify the tensile properties of the cured film that forms, storage stability enhancers, radical inhibitors, metal deactivators, antiozonants, lubricants and pigments.

Examples of diluting solvents include alcohol solvents such as methanol, ethanol and isopropanol; aromatic hydrocarbon solvents such as benzene, toluene and xylene; aliphatic hydrocarbon solvents such as pentane, hexane, heptane and decane, ether solvents such as diethyl ether, tetrahydrofuran and 1,4-dioxane; ester solvents such as ethyl acetate and butyl acetate; and ketone solvents such as acetone, methyl ethyl ketone and methyl isobutyl ketone.

The primer composition preferably uses an aromatic hydrocarbon solvent such as toluene and is adjusted to a solids concentration of from 1 to 50 wt%, especially from 1 to 20 wt%.

The laminate of the invention can be obtained by applying the respective compositions described above onto a substrate and forming layers thereon.

A specific method for producing the laminate of the invention includes a first step of forming a primer coat layer by applying an acid-modified polyolefin-containing primer composition to at least one surface of a substrate, and a second step of forming a topcoat layer by applying a condensation-curable silicone composition-containing topcoat composition onto the primer coat layer obtained in the first step and curing the applied topcoat composition. As explained above, in this case, one or both of the primer composition and the topcoat composition includes an amino group-containing silane coupling agent.

The method of applying the primer composition and the topcoat composition is not particularly limited, and may be suitably selected from among known coating methods such as brush coating, spray coating, wiper coating, blade coating, roll coating and dipping.

The primer composition used in the invention can form a film at a room temperature of generally from about 10°C to about 40°C, although the temperature and other conditions may be suitably adjusted in order to regulate the rate of film formation.

In cases where the topcoat composition includes a silicone oligomer, as noted above, the cured film can form at a room temperature of from 10 to 40°C, although here too, conditions such as the humidity and temperature may be suitably adjusted in order to regulate the rate of film formation.

### EXAMPLES

The invention is illustrated more fully below by way of Synthesis Examples, Working Examples and Comparative Examples. However, the invention is not limited by these Examples.

### [Synthesis Example 1]

A one-liter separable flask equipped with a stirrer, a reflux condenser, a dropping funnel and a thermometer was charged with 10 g of a maleic anhydride-modified polypropylene (PMA-L, from Nitto Boseki Co., Ltd.) and 490 g of toluene, and stirred for one hour at 23°C to effect dissolution, thereby preparing a toluene solution (referred to below as "Primer 1").

### [Synthesis Example 2]

Aside from using the maleic anhydride-modified polypropylene PMA-LZ (from Nitto Boseki Co., Ltd.) instead of the maleic anhydride-modified polypropylene PMA-L (from Nitto Boseki Co., Ltd.), a toluene solution (referred to below as "Primer 2") was prepared in the same way as in Synthesis Example 1.

### [Comparative Synthesis Example 1]

Aside from using a chlorinated polypropylene (13LP, from Nitto Boseki Co., Ltd.) instead of a maleic anhydride-modified polypropylene (PMA-L, from Nitto Boseki Co., Ltd.), a toluene solution (referred to below as "Primer 3") was prepared in the same way as in Synthesis Example 1.

### [Working Examples 1 to 8, Synthesis Examples 1 to 8]

The surface of a polypropylene substrate was cleaned by air flow and, in each Example, the primer composition formulated as shown in Table 1 or 2 was thinly applied onto this surface by brush coating and dried, thereby forming a primer coat layer.

Next, in the respective Examples, the topcoat composition formulated as shown in Table 1 or 2 and containing a silicone oligomer was coated with a bar coater (No. 14) onto the surface of this primer coat layer and aged by being left to stand for one day under 23°C and 55% RH conditions, thereby producing a laminate.

### [Adhesion Test]

The adhesive properties of the laminates produced in the respective Working Examples and Comparative Examples above were evaluated by the cross-cut adhesion test. The results are shown in Tables 1 and 2.

The cross-cut adhesion test was carried out in general accordance with JIS K5400. A cross-cut pattern of 25 boxes was created by using a razor blade to make six vertical and six horizontal slits at 2 mm intervals on a test specimen. Commercial cellophane pressure-sensitive adhesive tape (from Nichiban KK) was firmly bonded thereon, following which the tape was rapidly peeled off at a 90° angle, and the number (X) of boxes where the film remained without peeling was indicated as X/25.

**[Table 1]**

| Working Example | | 1 | 2 | 3 | 4 | 5 | 6 | 7 | 8 |
|---|---|---|---|---|---|---|---|---|---|
| Primer composition (pbw) | Primer 1 | 100 | | 98 | 98 | 100 | | 98 | 98 |
| | Primer 2 | | 100 | | | | 100 | | |
| | Aminosilane solution | | | 2 | 2 | | | 2 | 2 |
| Topcoat composition (pbw) | KR-401N | 96 | 96 | 98 | 96 | | | | |
| | KR-500 | | | | | 96 | 96 | 98 | 96 |
| | Curing catalyst | 2 | 2 | 2 | 2 | 2 | 2 | 2 | 2 |
| | Aminosilane | 2 | 2 | | 2 | 2 | 2 | | 2 |
| Cross-cut adhes ion test | | 25/25 | 25/25 | 25/25 | 25/25 | 25/25 | 25/25 | 25/25 | 25/25 |

**[Table 2]**

| Comparative Example | | 1 | 2 | 3 | 4 | 5 | 6 | 7 | 8 |
|---|---|---|---|---|---|---|---|---|---|
| Primer composition (pbw) | Primer 1 | 100 | | | | | | | |
| | Primer 2 | | 100 | | | | | | |
| | Primer 3 | | | 100 | 98 | 100 | | | |
| | Primer 4 | | | | | | | 100 | |
| | Primer 5 | | | | | | | | 100 |
| | Aminosilane solution | | | | 2 | | 100 | | |
| Topcoat composition (pbw) | KR-401N | 98 | 98 | 96 | 96 | | 96 | 96 | 96 |
| | KR-500 | | | | | 96 | | | |
| | Curing catalyst | 2 | 2 | 2 | 2 | 2 | 2 | 2 | 2 |
| | Aminosilane | | | 2 | 2 | 2 | 2 | 2 | 2 |
| Cross-cut adhe sion test | | 0/25 | 0/25 | 0/25 | 0/25 | 0/25 | 0/25 | 0/25 | 0/25 |

Details on the ingredients in Tables 1 and 2 are given below.
- Aminosilane solution:: A 2 wt% toluene solution of 3-aminopropyltriethoxysilane (KBE-903, from Shin-Etsu Chemical Co., Ltd.)
- Primer 4:: A 5 wt% toluene solution of decyltrimethoxysilane (KBM-3103, from Shin-Etsu Chemical Co., Ltd.)
- Primer 5:: A 5 wt% toluene solution of 3-glycidoxypropyltrimethoxysilane (KBM-403, from Shin-Etsu Chemical Co., Ltd.)
- Silicone oligomers:: KR-401N (methyl group and phenyl group-containing silicone oligomer; methoxy group content, 33 wt%, from Shin-Etsu Chemical Co., Ltd.), KR-500 (methyl group-containing silicone oligomer; methoxy group content, 28 wt%; from Shin-Etsu Chemical Co., Ltd.)
- Curing catalyst:: D-25 (from Shin-Etsu Chemical Co., Ltd.)
- Aminosilane:: 3-Aminopropyltriethoxysilane (KBE-903, from Shin-Etsu Chemical Co., Ltd.)

As shown in Table 1, in the laminates of Working Examples 1 to 8 produced using a primer composition and/or a topcoat composition containing an amino group-containing silane coupling agent, because adhesion between the substrate and the topcoat layer is excellent, substantially no peeling of boxes is apparent in the cross-cut adhesion test.

By contrast, as shown in Table 2, in the laminates of Comparative Examples 1 to 8 produced using primer and topcoat compositions that do not contain an amino group-containing silane coupling agent or using a primer composition that does not contain an acid-modified polyolefin, because adhesion between the substrate and the topcoat layer was inadequate, all of the boxes peeled off in the cross-cut adhesion test.

## Claims

1. A laminate comprising a substrate, a primer coat layer formed on at least one surface of the substrate, and a topcoat layer formed on the primer coat layer,
wherein the primer coat layer is formed of a primer composition containing an acid-modified polyolefin,
the topcoat layer is formed of the cured product of a topcoat composition containing a condensation-curable silicone composition, and
one or both of the primer composition and the topcoat composition includes an amino group-containing silane coupling agent.

2. The laminate of claim 1, wherein only the topcoat composition includes the amino group-containing silane coupling agent.

3. The laminate of claim 1 or 2, wherein the condensation-curable silicone composition includes a silicone oligomer.

4. The laminate of any one of claims 1 to 3, wherein the acid-modified polyolefin is a maleic anhydride-modified polypropylene.

5. The laminate of any one of claims 1 to 4, wherein the substrate is a polypropylene substrate.

6. A method for producing a laminate, the method comprising:
a first step of forming a primer coat layer by applying an acid-modified polyolefin-containing primer composition to at least one surface of a substrate, and
a second step of forming a topcoat layer by applying a condensation-curable silicone composition-containing topcoat composition onto the primer coat layer obtained in the first step and curing the applied topcoat composition,
wherein one or both of the primer composition and the topcoat composition includes an amino group-containing silane coupling agent.

7. The laminate production method of claim 6, wherein only the topcoat composition includes the amino group-containing silane coupling agent.

8. The laminate production method of claim 6 or 7, wherein the condensation-curable silicone composition includes a silicone oligomer.

9. The laminate production method of any one of claims 6 to 8, wherein the acid-modified polyolefin is a maleic anhydride-modified polypropylene.

10. The laminate production method of any one of claims 6 to 9, wherein the substrate is a polypropylene substrate.

## Patentansprüche

1. Laminat, das ein Substrat, eine auf zumindest einer Oberfläche des Substrats ausgebildete Grundierungsschicht und eine auf der Grundierungsschicht ausgebildete Deckschicht umfasst,
wobei die Grundierungsschicht aus einer Grundierungszusammensetzung gebildet ist, die ein säuremodifiziertes Polyolefin enthält,
wobei die Deckschicht aus dem gehärteten Produkt einer Deckschichtzusammensetzung gebildet ist, die eine kondensationshärtbare Silikonzusammensetzung enthält, und
eine oder beide aus der Grundierungszusammensetzung und der Deckschichtzusammensetzung einen aminogruppenhältigen Silan-Haftvermittler umfassen.

2. Laminat nach Anspruch 1, wobei nur die Deckschichtzusammensetzung den aminogruppenhältigen Silan-Haftvermittler umfasst.

3. Laminat nach Anspruch 1 oder 2, wobei die kondensationshärtbare Silikonzusammensetzung ein Silikonoligomer umfasst.

4. Laminat nach einem der Ansprüche 1 bis 3, wobei das säuremodifizierte Polyolefin ein Maleinsäureanhydrid-modifiziertes Polypropylen ist.

5. Laminat nach einem der Ansprüche 1 bis 4, wobei das Substrat ein Polypropylensubstrat ist.

6. Verfahren zur Herstellung eines Laminats, wobei das Verfahren Folgendes umfasst:
einen ersten Schritt des Ausbildens einer Grundierungsschicht durch Aufbringen einer säuremodifiziertes Polyolefin enthaltenden Grundierungszusammensetzung auf zumindest eine Oberfläche eines Substrats und
einen zweiten Schritt des Ausbildens einer Deckschicht durch Aufbringen einer eine kondensationshärtbare Silikonzusammensetzung enthaltenden Deckschichtzusammensetzung auf die im ersten Schritt erhaltene Grundierungsschicht sowie des Härtens der aufgebrachten Deckschichtzusammensetzung,
wobei eine oder beide aus der Grundierungszusammensetzung und der Deckschichtzusammensetzung einen aminogruppenhältigen Silan-Haftvermittler umfassen.

7. Laminatherstellungsverfahren nach Anspruch 6, wobei nur die Deckschichtzusammensetzung den aminogruppenhältigen Silan-Haftvermittler umfasst.

8. Laminatherstellungsverfahren nach Anspruch 6 oder 7, wobei die kondensationshärtbare Silikonzusammensetzung ein Silikonoligomer umfasst.

9. Laminatherstellungsverfahren nach einem der Ansprüche 6 bis 8, wobei das säuremodifizierte Polyolefin ein Maleinsäureanhydrid-modifiziertes Polypropylen ist.

10. Laminatherstellungsverfahren nach einem der Ansprüche 6 bis 9, wobei das Substrat ein Polypropylensubstrat ist.

## Revendications

1. Stratifié comprenant un substrat, une couche de revêtement d'apprêt formée sur au moins une surface du substrat, et une couche de revêtement de finition formée sur la couche de revêtement d'apprêt, dans lequel
la couche de revêtement d'apprêt est formée d'une composition d'apprêt contenant une polyoléfine modifiée par un acide,
la couche de revêtement de finition est formée du produit durci d'une composition de revêtement de finition contenant une composition de silicone durcissable par condensation, et
l'une ou les deux parmi la composition d'apprêt et la composition de revêtement de finition comprennent un agent de couplage au silane contenant un groupe amino.

2. Stratifié selon la revendication 1, dans lequel seule la composition de revêtement de finition comprend l'agent de couplage au silane contenant un groupe amino.

3. Stratifié selon la revendication 1 ou 2, dans lequel la composition de silicone durcissable par condensation comprend un oligomère de silicone.

4. Stratifié selon l'une quelconque des revendications 1 à 3, dans lequel la polyoléfine modifiée par un acide est un polypropylène modifié par de l'anhydride maléique.

5. Stratifié selon l'une quelconque des revendications 1 à 4, dans lequel le substrat est un substrat en polypropylène.

6. Procédé pour produire un stratifié, le procédé comprenant :
une première étape de formation d'une couche de revêtement d'apprêt par application d'une composition d'apprêt contenant une polyoléfine modifiée par un acide sur au moins une surface d'un substrat, et
une deuxième étape de formation d'une couche de revêtement de finition par application d'une composition de revêtement de finition contenant une composition de silicone durcissable par condensation sur la couche de revêtement d'apprêt obtenue dans la première étape, et de durcissement de la composition de revêtement de finition appliquée,
dans lequel l'une ou les deux parmi la composition d'apprêt et la composition de revêtement de finition comprennent un agent de couplage au silane contenant un groupe amino.

7. Procédé de production de stratifié selon la revendication 6, dans lequel seule la composition de revêtement de finition comprend l'agent de couplage au silane contenant un groupe amino.

8. Procédé de production de stratifié selon la revendication 6 ou 7, dans lequel la composition de silicone durcissable par condensation comprend un oligomère de silicone.

9. Procédé de production de stratifié selon l'une quelconque des revendications 6 à 8, dans lequel la polyoléfine modifiée par un acide est un polypropylène modifié par de l'anhydride maléique.

10. Procédé de production de stratifié selon l'une quelconque des revendications 6 à 9, dans lequel le substrat est un substrat en polypropylène.
